**Europäisches Patentamt**

**European Patent Office**

**Office européen des brevets**

(19)

(11) Publication number : **0 509 011 B1**

# EUROPEAN PATENT SPECIFICATION

(12)

(45) Date of publication of patent specification :
23.11.94 Bulletin 94/47

(51) Int. Cl.⁵ : **E03F 5/10**

(21) Application number : **91901850.7**

(22) Date of filing : **20.12.90**

(86) International application number :
**PCT/GB90/01986**

(87) International publication number :
**WO 91/10020 11.07.91 Gazette 91/15**

(54) **LIQUID FLOW APPARATUS.**

(30) Priority : **04.01.90 GB 9000161**

(43) Date of publication of application :
**21.10.92 Bulletin 92/43**

(45) Publication of the grant of the patent :
**23.11.94 Bulletin 94/47**

(84) Designated Contracting States :
**AT BE CH DE DK ES FR GB GR IT LI LU NL SE**

(56) References cited :
FR-A- 2 429 297
PATENT ABSTRACTS OF JAPAN, vol. 7, no.
287 (M-264)(1432) December 21, 1983 &
JP-A-58 160 423 (SEKISUI KAGAKU KOGYO
KK) September 22, 1983

(73) Proprietor : **THAMES WATER UTILITIES LIMITED**
**Spencer House,**
**Manor Farm Road**
**Reading, Berkshire RG2 0JN (GB)**

(72) Inventor : **MUIR, Andrew, Robert, Hugh**
**6 Mill Lane**
**Chalgrove**
**Oxon OX9 7SL (GB)**

(74) Representative : **Johnson, Terence Leslie**
**Edward Evans & Co.**
**Chancery House**
**53-64 Chancery Lane**
**London WC2A 1SD (GB)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to liquid flow apparatus, particularly such apparatus for providing a substantially uniform flow of liquid, such as in sewage treatment plants or works.

In such plants or works, particularly ones of small capacity, liquid flow is often received entirely, or mainly, from pumping stations. A major problem that this can cause is an intermittent flow to the treatment process. If there are multiple pumped inlets, or very large pumps, then this flow can surcharge the works for a short period. A typical way of overcoming this is to set a weir level at, say, 3 times the designed Dry Weather Flow (DWF) and allow the excess discharge to a balancing tank, to be returned later when the flow rate drops. This tank will usually be designed to retain flow for up to two hours. After this flow would 'storm' to another outlet thereby safeguarding the works from long flow rates of greater than 3 x DWF. This method limits the flow to the plant to a desired maximum, usually 3 x DWF to protect the treatment process from hydraulic overload. When the pumps are running the flow will still peak at 3 x DWF through the plant and will return to zero for periods between pumping cycles. The flow discharged over the weir must also be pumped back into the plant when the bulk of the flow subsides. This operating cycle is inefficient as it provides uneven flow through the plant, with energy expenditure on pumping discharged liquid back into the plant to be treated.

Document FR-A-2429297 discloses two liquid receiving receptacles, one receiving input flow from one pipe and supplying the other through a further pipe, there being a desired maximum flow from the chambers, without any control of that flow.

It is accordingly an object of the invention to seek to mitigate these disadvantages.

According to a first aspect of the invention there is provided apparatus for providing a substantially uniform flow of liquid, comprising a plurality of liquid receiving chambers a first one of which is arranged for connection with a source of liquid, and a second one of which is arranged to receive liquid from the first one, characterised by liquid outlets comprising limiting devices for liquid flow from the respective chambers arranged so that liquid flow therethrough is combined to provide a maximum desired outlet flow from the apparatus, and by the chambers comprising at least part of a vessel for liquid.

Using the invention it is possible to provide for effective flow control without the need for additional equipment.

Preferably there may be two chambers. This provides a relatively efficient use of available space.

The second chamber may be within and defined by wall means interiorly of the first chamber. This provides a compact apparatus.

Part of the wall means may comprise feed means whereby liquid can pass from the first chamber to the second chamber. This provides a relatively simple structure.

The devices may be adapted to be connected to a common conduit downstream of the chambers. This enables the balanced flow of liquid to be passed on to subsequent treatment.

The flow limiting device of the second chamber may provide substantially twice the volume flow through the flow limiting device of the first chamber.

The apparatus may include an overflow means from the first chamber separate from the feed means to the second chamber.

According to a second aspect of the invention there is provided a sewage treatment plant, including apparatus as hereinbefore defined.

Apparatus embodying the invention is hereinafter described, by way of example, with reference to the accompanying drawings.

Fig.1 shows schematically a perspective view of apparatus according to the invention, for providing a substantially uniform flow of liquid;

Fig.2 shows graphically a flow regime for a prior art system; and

Fig.3 shows graphically a flow regime for apparatus according to Fig.1.

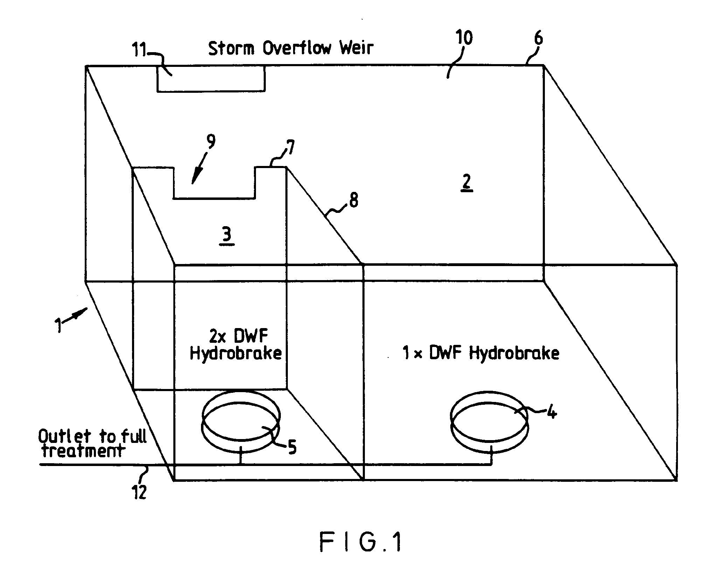

Referring to the drawings, Fig. 1 shows apparatus 1 for providing a substantially uniform flow of liquid, as in this case sewage, comprising a plurality of chambers 2 and 3 a first or one of which 2 is arranged for connection with a source (not shown) of sewage and a second or another 3 of which is arranged to receive liquid from the one chamber 2, both chambers 2 and 3 having a respective outlet 4 and 5 for liquid arranged so that liquid flow therethrough is combined to provide a maximum desired flow rate from the chambers 2 and 3.

The two chambers 2 and 3 together comprise a vessel or tank 6, the another chamber 3 being separate from the one chamber 2 and defined by wall means in the form of walls 7 and 8 interiorly of the one chamber 2. The another chamber 3 is thus wholly within the chamber 2.

One wall 7 has a cut out part 9 or weir which defines feed means whereby liquid from the one chamber 2 can discharge into the another chamber 3.

A boundary wall 10 of the vessel 6 has a weir or overflowing means 11 from the one chamber 2, which weir or overflowing means 11 from the one chamber 2, which weir 11 is separate from the feed means 9 to the another chamber 3.

Each chamber 2 and 3 has in its base (as viewed) the respective outlets 4 and 5 which are in the form of liquid flow limiting devices. The device 4 in the one or primary chamber 2 is set for a flow equal to 1 x the Dry Weather Flow (DWF) or 1 x the average flow depending on local conditions. In the another or secondary chamber 3, the associated device 5 is set with a flow restriction which gives a combined liquid flow from both chambers of 3 x DWF or the maximum desirable flow to be sent downstream of the vessel 6 to further or full treatment. The combined flow is thus either:-

(a) 1 x DWF + secondary 2 x DWF = 3 DWF

or

(b) 1.25 x DWF (average flow) + secondary flow 1.75 x DWF.

In use, liquid sewage flows to the vessel 6 from several outlying sources such as pumping stations on its way via a conduit 12 fed in common by the outlets 4 and 5 to a treatment works.

Under normal conditions the flow would be restricted through the first flow limiting device 4 from the one chamber 2 regardless of the maximum rate of inflow from the pumping stations, this being the most ideal rate for operation of the works. If conditions of high prolonged flow occur such as during persistent rain, then the rate at which the sewage arrives at the works will be greater than the restriction at the limiting device 4. The flow would then discharge into the secondary chamber 3 via feed means 9. It would be able to exit from this chamber 3 up to a rate, combined with the chamber 2, not exceeding 3 x DWF or the maximum desirable flow. This provides a continuous and gradual increase in flow from 1 x DWF (or overage flow) to 3 x DWF depending on the incoming flow rate. If and only if the flow enters the works at a rate exceeding 3 x DWF for long period would the flow eventually 'storm' to the storm overflow over the weir 11.

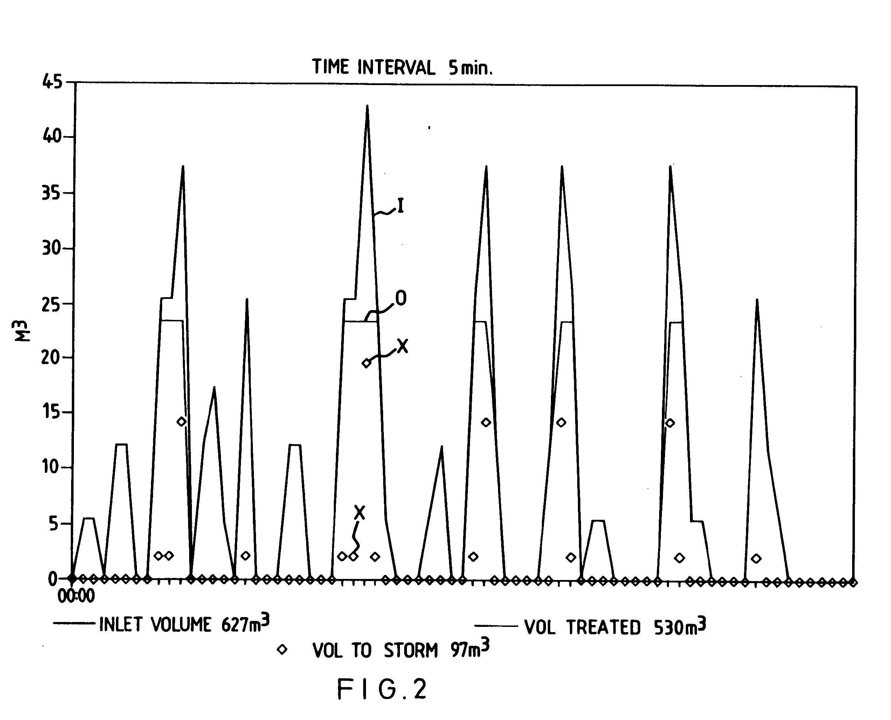

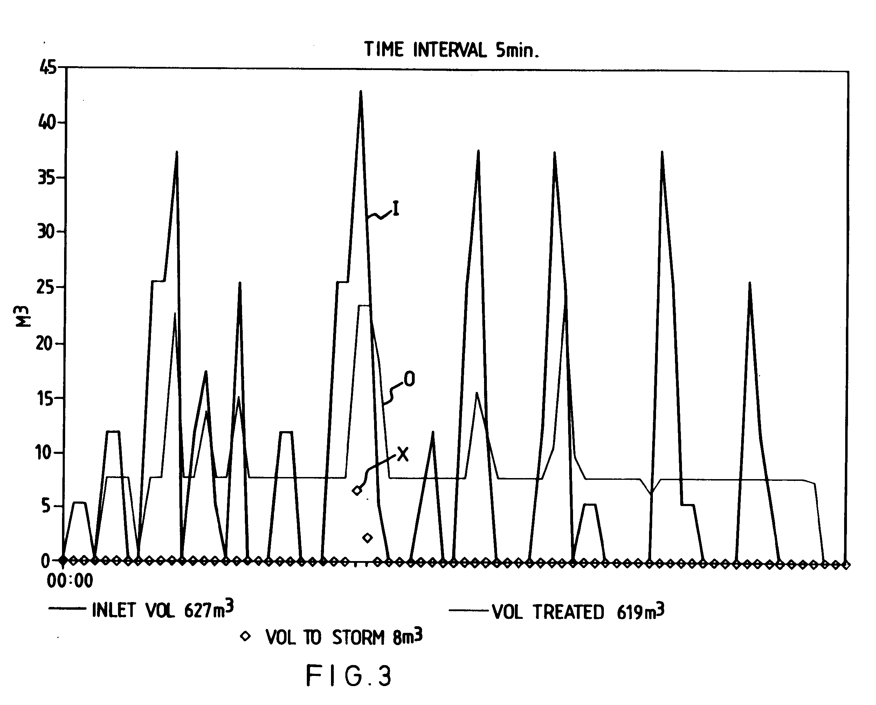

Referring now to Figs. 2 and 3, the graphs show a typical pumping regime to a works with three independent pumping inlets at rates of 18 litres/sec, 40 litres/sec and 85 litres/sec but delivering a DWF of 26 litres/sec over a day. The size of the chambers 2 and 3 will vary depending on local conditions but in general the capacity of each one is not critical. Fig 2 shows the profile of a typical prior balancing tank set-up with a weir at 3 x DWF, Fig. 3 shows the flow profile of the apparatus 1 of Fig. 1.

Fig 2. shows a typical trace of a 'peak lopped' flow. Flow to the works is still fluctuating between 0 and 3 x DWF spending a great deal of the time at the designed maximum flow, and 97 cubic metres spills over the weir 11 into the storm tank. This volume has to be returned to the inlet works by pumps in times of low flow at an added energy cost. The apparatus of Fig. 1 has a volume of 50 cubic metres (chamber 2 40m³, chamber 3 10m³). Only 8 cubic metres has spilled over the 3 x DWF weir to be returned at low flow periods. This is a reduction in pumping costs of about 90% at the same time as achieving a much more constant flow to the works. The graphs can be summarised in the following tables:

| Fig 2 | Fig 3 (apparatus of Fig. 1 |
|---|---|
| One chamber 100 cubic metres 97 cubic metres to be pumped back to head of works. Flow is 'peaked lopped' but still fluctuates mainly to 3 x DWF. | Two chambers 2 and 3, respectively 40 and 10 cubic metres 8 cubic metres to be pumped back to head of works. Flow to works is relatively smooth mainly at 1 x DWF. |

In both graphs, the inlet flow is indicated by the heavy line 'I', the outlet flow by the lighter line 'O', the occurrences of overflow being indicated in each case at 'X'. It can be seen from Fig. 3 that despite fluctuations of inlet sewage flow 'I', the outlet flow 'O' is very stable, with less loss over the weir to overflow, as compared with the outlet flow of the conventional apparatus (Fig. 2).

It will therefore be understood that apparatus 1 (and a plant incorporating same) has the advantage that it provides an even flow at the designed optimum flow of 1 x DWF to a sewage treatment works under a variety of incoming flow fluctions and over a greater time than for conventional systems. The vessel 6 can also be of a smaller size than a conventional vessel with a weir overflow and no secondary chamber as in the invention.

A plant embodying the apparatus 1 can provide part of a modular or package unit, which provides for flexibility in use.

It will be understood that the chamber 3 may be separate from, and in fluid connection with, the chamber 2, rather than within it as shown in Fig. 1. Also, there may be a plurality of chambers 3 each with a flow limiting device 4, rather than one as shown.

## Claims

1. Apparatus for providing a substantially uniform flow of liquid, comprising a plurality of liquid receiving chambers (2,3) a first one of which is arranged for connection with a source of liquid, and a second one of which is arranged to receive liquid from the first one, characterised by liquid outlets (4, 5) comprising limiting devices for liquid flow from the respective chambers (2, 3) arranged so that liquid flow therethrough is combined to provide a maximum desired outlet flow from the apparatus, and by the chambers (2, 3) comprising at least part of a vessel (6) for liquid.

2. Apparatus according to Claim 1, characterised by two chambers (2, 3).

3. Apparatus according to Claim 2, characterised by the second chamber (3) being defined by wall means (7, 8) interiorly of the first chamber (2).

4. Apparatus according to Claim 3, characterised by part of the wall means (7) comprising feed means (9) whereby liquid can pass from the first chamber (20 to the second chamber (3).

5. Apparatus according to Claim 4, characterised by the devices (4, 5) being adapted to be connected to a common conduit (11) downstream of the chambers (2, 3).

6. Apparatus according to Claim 4 or Claim 5, characterised by the flow limiting device (5) of the second chamber (3) providing substantially twice the volume flow through the flow limiting device (4) of the first chamber (2).

7. Apparatus according to any of claims 3 to 6, characterised by an overflow means (11) from the first chamber (2) separate from the feed means (9) to the second chamber (3).

8. A sewage treatment plant, including apparatus according to any preceding claim.

## Patentansprüche

1. Apparat, um einen wesentlich gleichmässigen Flüssigkeitsstrom zu liefern, mit einer Mehrzahl von Flüssigkeit erhaltenden Kammern (2, 3), wovon eine erste eingerichtet ist, um mit einer Flüssigkeitsquelle verbunden zu werden, und eine zweite eingerichtet ist, um Flüssigkeit von der ersten zu erhalten, gekennzeichnet durch Flüssigkeitsauslässe (4, 5) mit Begrenzvorrichtungen für den Flüssigkeitsstrom von den jeweiligen Kammern (2, 3), die so eingerichtet sind, dass die durchfliessenden Ströme sich kombinieren, um einen maximal erwünschten Ausgangsstrom von dem Apparat zu erzeugen und dadurch, dass die Kammern (2, 3) wenigstens einen Teil eines Behälters (6) für die Flüssigkeit einbegreifen.

2. Apparat gemäss Anspruch 1, gekennzeichnet durch zwei Kammern (2, 3).

3. Apparat gemäss Anspruch 2, dadurch gekennzeichnet, dass die zweite Kammer (3) durch Wände (7, 8) im Innern der ersten Kammer (2) begrenzt wird.

4. Apparat gemäss Anspruch 3, dadurch gekennzeichnet, dass ein Teil der Wände Zuführmittel aufweisen, wodurch Flüssigkeit von der ersten Kammer (2) in die zweite Kammer (3) fliessen kann.

5. Apparat gemäss Anspruch 4, dadurch gekennzeichnet, dass die Vorrichtungen (4, 5) eingerichtet sind, um mit einem gemeinsamen Rohr (11) stromabwärts der Kammern (2, 3) angeschlossen zu werden.

6. Apparat gemäss Anspruch 4 oder Anspruch 5, dadurch gekennzeichnet, dass die Strombegrenzvorrichtung (5) der zweiten Kammer (3) wesentlich das doppelte des Stromvolumens durch die Strombegrenzungsvorrichtung (4) der ersten Kammer (2) liefert.

**7.** Apparat gemäss irgendeinem der Ansprüche 3 bis 6, gekennzeichnet durch Ueberflussmittel der ersten Kammer (2), die getrennt sind von den Zuführmitteln (9) zur zweiten Kammer (3).

**8.** Abwasserverarbeitungseinheit mit einem Apparat gemäss irgendeinem der vorherigen Ansprüche.

**Revendications**

**1.** Appareil destiné à assurer un débit de liquide substantiellement uniforme, comprenant une pluralité de chambres (2, 3) recevant du liquide, dont la première est adaptée pour être connectée à une source de liquide, et dont une seconde est adaptée pour recevoir du liquide de la première, caractérisé par des sorties de liquide (4, 5) comprenant des dispositifs limitateurs des débits liquides provenant des chambres respectives (2, 3) arrangés de telle manière à ce que le débit liquide qui les traverse est combiné de manière à fournir un débit de sortie souhaité maximum de l'appareil, et en ce que les chambres (2, 3) comprennent au moins une partie d'un récipient (6) pour liquides.

**2.** Appareil selon la revendication 1, caractérisé par deux chambres (2, 3).

**3.** Appareil selon la revendication 2, caractérisé en ce que la seconde chambre (3) est définie au moyen de parois (7, 8) à l'intérieur de la première chambre (2).

**4.** Appareil selon la revendication 3, caractérisé en ce qu'une partie des parois (7) présente des moyens d'alimentation (9) par lesquels du liquide peut passer de la première chambre (2) à la seconde chambre (3).

**5.** Appareil selon la revendication 4, caractérisé en ce que les dispositifs (4, 5) sont adaptés pour être connectés à un conduit commun (11) en aval des chambres (2, 3).

**6.** Appareil selon la revendication 4 ou la revendication 5, caractérisé en ce que le dispositif limitateur de débit (5) de la deuxième chambre (3) fournit substantiellement le double du volume du débit à travers le dispositif limitateur de débit (4) de la première chambre (2).

**7.** Appareil selon l'une quelconque des revendications 3 à 6, caractérisé par un moyen de débordement (11) de la première chambre (2) distinct du moyen d'alimentation (9) de la deuxième chambre (3).

**8.** Installation de traitement d'eaux usées comprenant un appareil selon l'une quelconque des revendications précédentes.

Storm Overflow Weir

2x DWF
Hydrobrake

1 x DWF Hydrobrake

Outlet to full
treatment

FIG.1

TIME INTERVAL 5 min.

FIG. 2

——INLET VOLUME 627m³          —— VOL TREATED 530m³

◇ VOL TO STORM 97m³

EP 0 509 011 B1

TIME INTERVAL 5min.

FIG.3

INLET VOL 627m³       VOL TREATED 619m³

◇ VOL TO STORM 8m³

EP 0 509 011 B1